# EUROPEAN PATENT APPLICATION

(11) **EP 4 657 635 A1**
(43) Date of publication of application: **03.12.2025**
(21) Application number: 24795858.0
(22) Date of filing: 12.04.2024
(51) Int. Cl.: H01M 50/30, H01M 50/244, H01M 50/213

(54) **BATTERY PACK SHELL, BATTERY PACK AND ELECTRIC DEVICE**

(30) Priority: 28.04.2023 CN 202321025075 U
(71) Applicant: BYD Company Limited, Shenzhen, Guangdong 518118 (CN)
(72) Inventor: TUO, Hongming, Shenzhen, Guangdong 518118 (CN); XIE, Shifeng, Shenzhen, Guangdong 518118 (CN); WANG, Xiaolong, Shenzhen, Guangdong 518118 (CN); SHEN, Jiaxin, Shenzhen, Guangdong 518118 (CN); TAN, Jing, Shenzhen, Guangdong 518118 (CN)
(74) Representative: Taor, Simon Edward William
(86) International application number: PCT/CN2024/087358
(87) International publication number: WO 2024/222477

(57) **Abstract**

An electric apparatus includes a battery pack. The battery pack includes a battery pack housing. The battery pack housing includes a tray and a support assembly. An accommodating cavity is formed in the tray. The support assembly is disposed in the accommodating cavity. The support assembly includes a partition member and a support member. The partition member partitions the accommodating cavity into battery mounting space and power distribution space. The support member is located in the power distribution space and is supported between the partition member and a side frame of the tray.

## Description

### CROSS-REFERENCE TO RELATED APPLICATIONS

The present disclosure is provided based on Chinese Patent Application No. 202321025075.6, filed on April 28, 2023, and claims priority to this Chinese Patent Application, which is incorporated herein by reference in its entirety.

### TECHNICAL FIELD

The present disclosure relates to the field of battery technologies, and in particular, to a battery pack housing, a battery pack, and an electric apparatus.

### BACKGROUND

In a related technology, in a battery pack, a baffle is generally disposed between a battery and a side frame of a tray of a battery pack housing, and power distribution space is formed between the baffle and the side frame to mount various electrical elements. However, when the battery is fastened by using foam adhesive, expansion force generated in a foaming process of the foam adhesive may break through the baffle, allowing the foam adhesive and the baffle to intrude into the power distribution space.

### SUMMARY

The present disclosure is intended to resolve one of technical problems in a related technology to at least a specific extent.

Therefore, an objective of the present disclosure is to provide a battery pack housing.

Another objective of the present disclosure is to provide a battery pack.

Still another objective of the present disclosure is to provide an electric apparatus.

To achieve the foregoing objectives, an embodiment of a first aspect of the present disclosure provides a battery pack housing, including:
a tray, an accommodating cavity being formed in the tray; and
a support assembly, the support assembly being disposed in the accommodating cavity, the support assembly including a partition member and a support member, the partition member partitioning the accommodating cavity into battery mounting space and power distribution space, and the support member being located in the power distribution space and being supported between the partition member and a side frame of the tray.

According to the battery pack housing in this embodiment of the present disclosure, the battery pack housing is provided with the support assembly, and the support assembly includes the partition member and the support member. The partition member partitions the accommodating cavity into the battery mounting space and the power distribution space. The partition member is located between a battery and the support member and bears expansion-induced compressive force generated by curing of foam adhesive, and the support member is supported between the partition member and the side frame of the tray. Therefore, the expansion-induced compressive force borne by the partition member can be distributed to the side frame of the tray through the support member, allowing the partition member to effectively resist the expansion-induced compressive force from the foam adhesive, thereby preventing the partition member from intruding into the power distribution space formed between the partition member and the side frame.

To achieve the foregoing objectives, an embodiment of a second aspect of the present disclosure provides a battery pack, which includes a battery and the battery pack housing in the embodiment of the first aspect, and the battery is mounted in the battery mounting space.

According to the battery pack in this embodiment of the present disclosure, since the foregoing battery pack housing is provided, expansion-induced compressive force borne by the partition member can be distributed to the side frame of the tray through the support member, allowing the partition member to effectively resist expansion-induced compressive force from foam adhesive, thereby preventing the partition member from intruding into the power distribution space formed between the partition member and the side frame.

To achieve the foregoing objectives, an embodiment of a third aspect of the present disclosure provides an electric apparatus, including the battery pack in the embodiment of the second aspect.

According to the electric apparatus in this embodiment of the present disclosure, since the foregoing battery pack is provided, expansion-induced compressive force borne by the partition member can be distributed to the side frame of the tray through the support member, allowing the partition member to effectively resist expansion-induced compressive force from foam adhesive, thereby preventing the partition member from intruding into the power distribution space formed between the partition member and the side frame.

Additional aspects and advantages of the present disclosure are partially provided in the following descriptions, and partially become clear from the following descriptions, or are understood through practice of the present disclosure.

### BRIEF DESCRIPTION OF DRAWINGS

FIG. 1 is a three-dimensional view of a battery pack housing and a power distribution box according to an embodiment of the present disclosure;
FIG. 2 is an exploded view of a battery pack according to an embodiment of the present disclosure;
FIG. 3 is a three-dimensional view of a support assembly according to a first embodiment of the present disclosure;
FIG. 4 is a partially enlarged view at a position A in FIG. 3;
FIG. 5 is a three-dimensional view of a support assembly according to a second embodiment of the present disclosure;
FIG. 6 is a top view of a tray, a support assembly, and a mounting bracket according to an embodiment of the present disclosure;
FIG. 7 is a sectional view along B-B in FIG. 6;
FIG. 8 is a partially enlarged view at a position C in FIG. 7;
FIG. 9 is a three-dimensional view of a support assembly according to a third embodiment of the present disclosure;
FIG. 10 is a three-dimensional view of a support sub-member according to an embodiment of the present disclosure; and
FIG. 11 is a schematic diagram of an electric apparatus according to an embodiment of the present disclosure.

### DESCRIPTION OF EMBODIMENTS

The following describes in detail embodiments of the present disclosure. Examples of the embodiments are shown in the accompanying drawings, where same or similar reference numerals throughout represent same or similar elements or elements having same or similar functions. The embodiments described below with reference to the accompanying drawings are examples, and are intended to explain the present disclosure and cannot be understood as limitations on the present disclosure.

The following describes in detail a battery pack housing 100, a battery pack 200, and an electric apparatus 300 according to embodiments of the present disclosure with reference to the accompanying drawings.

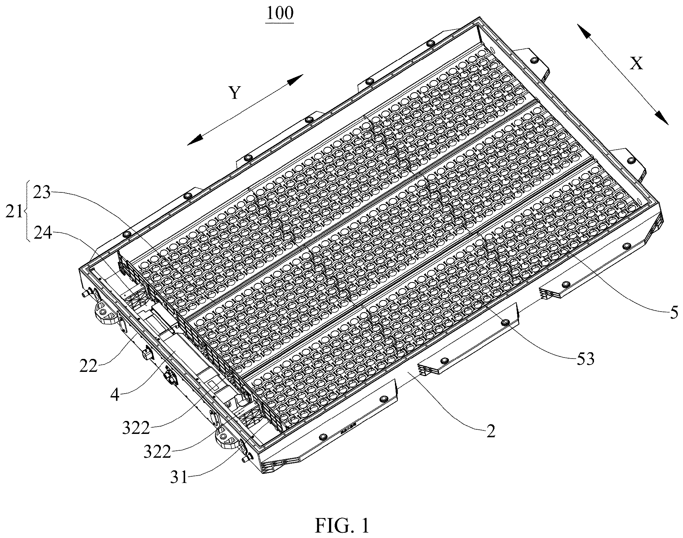

As shown in FIG. 1 to FIG. 10, a battery pack housing 100 according to an embodiment of a first aspect of the present disclosure includes a tray 2 and a support assembly 3. An accommodating cavity 21 is formed in the tray 2, the support assembly 3 is disposed in the accommodating cavity 21, and the support assembly 3 includes a partition member 31 and a support member 32, the partition member 31 partitions the accommodating cavity 21 into battery mounting space 23 and power distribution space 24, and the support member 32 is located in the power distribution space 24 and is supported between the partition member 31 and a side frame 22 of the tray 2.

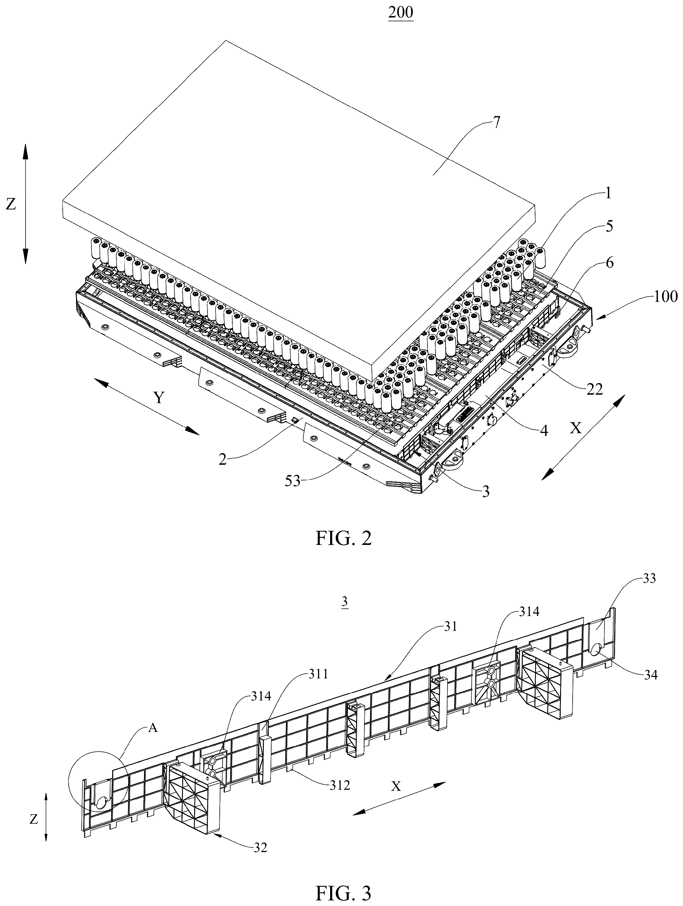

Specifically, as shown in FIG. 2, in a process of assembling the battery pack housing 100, both a battery 1 and the support assembly 3 are mounted in the accommodating cavity 21 of the tray 2. The support assembly 3 includes the partition member 31. The partition member 31 can be, but is not limited to, a plate-like structure. The partition member 31 is arranged in parallel to the side frame 22 and separates the battery 1 from the side frame 22. As shown in FIG. 1, the accommodating cavity 21 is partitioned by the partition member 31 into the battery mounting space 23 and the power distribution space 24. The battery mounting space 23 is configured to mount the battery located in the power distribution space. The power distribution space 24 is configured to mount various electrical elements such as a power distribution box 4, a temperature collector, and a signal sensor. This allows for the separation of the battery 1 from the various electrical elements by the partition member 31. After the battery 1 and the support assembly 3 are mounted, with continued reference to FIG. 2, foam adhesive 7 is poured into the battery mounting space 23 to cure the battery 1 by using the foam adhesive 7, to fasten the battery 1 to the tray 2. The foam adhesive 7 expands in a curing process, and expansion force generated by expansion is transmitted to the partition member. The support assembly 3 further includes the support member 32. The support member 32 is located in the power distribution space 24 and is supported between the partition member 31 and the side frame 22 of the tray 2. Therefore, expansion-induced compressive force borne by the partition member is transmitted to the side frame 22 through the support member 32, which is equivalent to sharing part of the expansion-induced compressive force. Optionally, the support member 32 is perpendicularly disposed between the partition member 31 and the side frame 22 of the tray 2. With this arrangement, the dispersion of the transmitted force can be avoided, a good route for force transmission is ensured, and a transmission effect of the expansion-induced compressive force is enhanced, so that more expansion-induced compressive force is transmitted to the side frame 22. In this way, the partition member 31 can resist the expansion-induced compressive force from the foam adhesive 7 more effectively, thereby preventing the expansion-induced compressive force from breaking through the partition member 31 and intruding into the power distribution space 24 formed between the partition member 31 and the side frame 22.

According to the battery pack housing 100 in this embodiment of the present disclosure, the battery pack housing 100 is provided with the support assembly 3. The support assembly 3 includes the partition member 31 and the support member 32. The partition member 31 partitions the accommodating cavity 21 into the battery mounting space 23 and the power distribution space 24, and the partition member 31 is located between the battery 1 and the support member 32, and bears the expansion-induced compressive force generated by the curing of the foam adhesive 7. The support member 32 is supported between the partition member 31 and the side frame 22 of the tray 2. Therefore, the expansion-induced compressive force borne by the partition member 31 can be distributed to the side frame 22 of the tray 2 through the support member 32, allowing the partition member 31 to effectively resist the expansion-induced compressive force from the foam adhesive 7, thereby preventing the partition member 31 from intruding into the power distribution space 24 formed between the partition member 31 and the side frame 22.

It should be noted that the support assembly 3 is formed by the partition member 31 and the support member 32, and an actual size of the support member 32 may be adjusted based on a size of the tray 2. If the tray 2 is relatively large, the size of the support member 32 may be increased, and if the tray 2 is relatively small, the size of the support member 32 may be decreased. By mounting a suitably sized support member 32 onto the partition member 31, the support assembly 3 that meets a current requirement of the tray 2 can be formed, thereby improving the applicability of the support assembly 3.

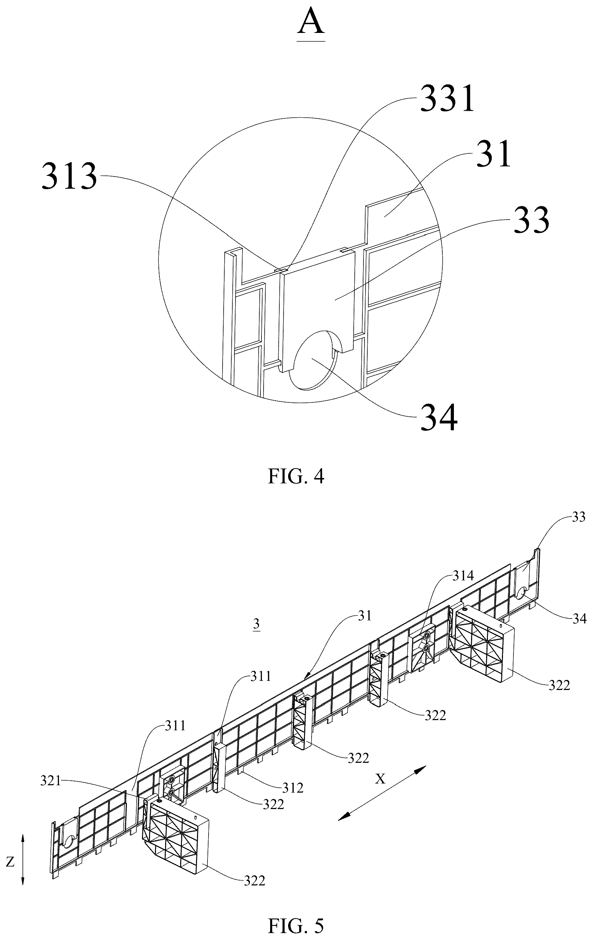

In some embodiments of the present disclosure, as shown in FIG. 3 and FIG. 5, the partition member 31 is provided with a first assembly portion 311, the support member 32 is provided with a second assembly portion 321, and the first assembly portion 311 and the second assembly portion 321 are assembled by fitting to fasten the partition member 31 to the support member 32.

Specifically, the support assembly 3 can be an integrally formed member, or can be formed by a detachable partition member 31 and support member 32. The present disclosure is described by using the detachable partition member 31 and support member 32 as an example, where the partition member 31 is provided with the first assembly portion 311, the support member 32 is provided with the second assembly portion 321, and the first assembly portion 311 and the second assembly portion 321 are opposite to each other. For example, the second assembly portion 321 may be constructed as a protrusion structure, and the formed protrusion structure protrudes towards a direction approaching the partition member 31. The first assembly portion 311 may be constructed as a recess structure that is adapted to the second assembly portion 321. The first assembly portion 311 is constructed as a recess structure that is recessed from a surface of the partition member 31 towards an interior of the partition member 31. In a process of mounting the support assembly 3, the second assembly portion 321 of the support member 32 is correspondingly mounted to the first assembly portion 311 of the partition member 31 to achieve fixed mounting of the support member 32 and the partition member 31. With this arrangement, fixed assembly of the support member 32 and the partition member 31 is facilitated, and assembly efficiency is improved.

In some embodiments of the present disclosure, the first assembly portion 311 is one of an assembly groove and a mounting boss, and the second assembly portion 321 is the other of the assembly groove and the mounting boss.

Specifically, if the first assembly portion 311 is one of the assembly groove and the mounting boss, the second assembly portion 321 is the other of the assembly groove and the mounting boss. For example, if the first assembly portion 311 is an assembly groove, the second assembly portion 321 is a mounting boss, and if the first assembly portion 311 is a mounting boss, the second assembly portion 321 is an assembly groove. The present disclosure is described by using an example in which the first assembly portion 311 is an assembly groove and the second assembly portion 321 is a mounting boss. The assembly groove may be, but is not limited to, a recess, and the mounting boss is a boss corresponding to the recess. Further, the assembly groove and the mounting boss may be provided with corresponding assembly inclined planes respectively. With this arrangement, when the assembly groove and the mounting boss are assembled by fitting, assembly is assisted by using the assembly inclined planes, which reduces the difficulty in assembly, and is conducive to further improving assembly efficiency.

In some embodiments of the present disclosure, as shown in FIG. 5, the support member 32 includes a plurality of support sub-members 322, and plurality of support sub-members 322 are spaced apart in a length direction of the partition member 31.

Specifically, the support member 32 includes the plurality of support sub-members 322. A quantity of support sub-members 322 is set according to specific needs. For example, the quantity of support sub-members 322 may be 2, 3, 4, or 5, which is not specifically limited herein. The plurality of support sub-members 322 are sequentially arranged in the length direction of the partition member 31, that is, sequentially arranged in a first direction X. Each support sub-member 322 is fixedly assembled to the partition member 31 and is perpendicular to the partition member 31. For example, as shown in FIG. 5, the support member 32 includes five support sub-members 322. Each support sub-member 322 is provided with a mounting boss, and the mounting boss of the support sub-member 322 and an assembly groove of the partition member 31 are assembled by fitting, so that the support sub-member 322 is mounted to the partition member 31. Moreover, each support sub-member 322 is supported between the partition member 31 and the side frame 22 of the tray 2. With this arrangement, expansion-induced compressive force that is from the foam adhesive 7 and that is borne by the partition member 31 may be perpendicularly transmitted to the side frame 22 through the plurality of support sub-members 322, which further enhances a transmission effect of the expansion-induced compressive force, thereby allowing the partition member 31 to further resist the expansion-induced compressive force from the foam adhesive 7.

In some embodiments of the present disclosure, as shown in FIG. 1, FIG. 2, and FIG. 6 to FIG. 8, the battery pack housing 100 further includes a mounting bracket 5. The mounting bracket 5 is mounted in the battery mounting space 23, the mounting bracket 5 is adapted to mount the battery 1, and the partition member 31 is movably inserted into the mounting bracket 5.

Specifically, the battery pack housing 100 further includes the mounting bracket 5. The mounting bracket 5 is disposed in the battery mounting space 23 and is located at the bottom of the tray 2. The mounting bracket 5 is configured to mount the battery 1. After the battery 1 is mounted, the partition member 31 is movably inserted into the mounting bracket 5 in a third direction Z, allowing the partition member 31 to be perpendicular to the mounting bracket 5. With this arrangement, the partition member 31 can be directly inserted into the mounting bracket 5, thereby improving assembly efficiency. Moreover, after the battery 1, the mounting bracket 5, and the partition member 31 are assembled by fitting, the foam adhesive 7 is poured into the battery mounting space 23 to cure the battery 1 and the mounting bracket 5 by using the foam adhesive 7, thereby enabling the battery 1 and the mounting bracket 5 to be integrated and fastened to the tray 2, which enhances the stability during assembly of the battery 1.

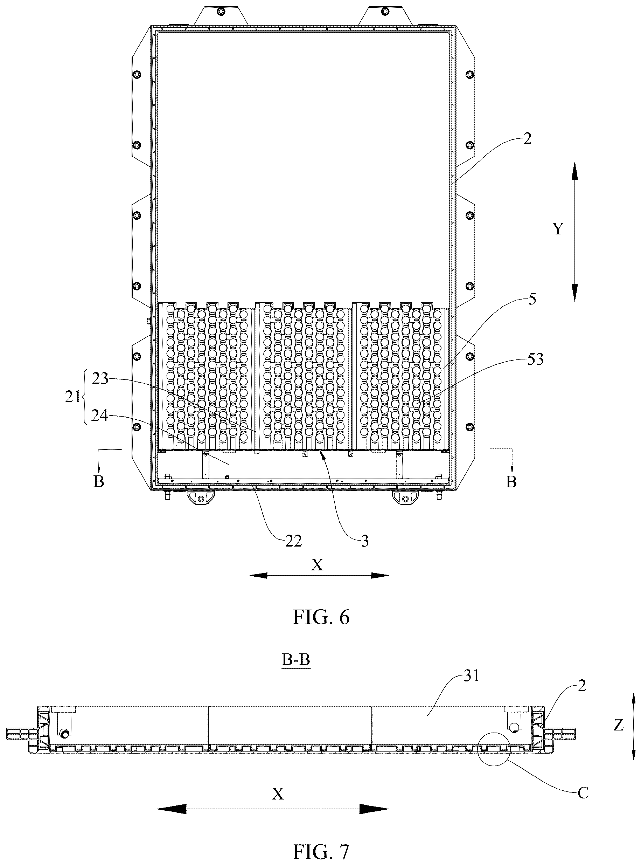

In some embodiments of the present disclosure, as shown in FIG. 6 to FIG. 8, an exhaust channel 51 is formed on the mounting bracket 5, the mounting bracket 5 is provided with an exhaust port 53 in communication with the exhaust channel 51, and the exhaust port 53 is adapted to correspond to an explosion-proof portion of the battery 1.

Further, as shown in FIG. 2, there are a plurality of batteries 1, and the plurality of batteries 1 are arranged in sequence. Moreover, as shown in FIG. 2, the batteries 1 are all fixedly mounted to an upper surface of the mounting bracket 5 to achieve an effect of assembling the batteries 1 in the foam adhesive 7. That is, by filling the batteries with the foam adhesive 7, strength of a connection between two adjacent batteries 1 is enhanced, thereby improving use safety of the battery pack 200. Therefore, filling the batteries with the foam adhesive 7 is conducive to enhancing the stability of the batteries 1 within an adhesive filling area, so that the batteries 1 can be reliably mounted to the mounting bracket.

Further, as shown in FIG. 6 and FIG. 7, when the mounting bracket 5 is placed in a direction shown in FIG. 7, the exhaust channel 51 is formed at the bottom of the mounting bracket 5 in a thickness direction (that is, the third direction Z) of the mounting bracket 5. Moreover, in the thickness direction of the mounting bracket 5, as shown in FIG. 6, the exhaust port 53 is constructed as a through hole that penetrates the mounting bracket 5, to achieve an effect that the exhaust port 53 is in communication with the exhaust channel 51.

Further, when the battery 1 is assembled to the mounting bracket 5, an explosion-proof portion of each battery 1 is disposed in correspondence with the exhaust port 53 in the thickness direction of the mounting bracket 5, so that when the battery 1 experiences thermal runaway, the exhaust port 53 can avoid the explosion-proof portion to ensure that the explosion-proof portion is opened normally. Gas discharged from an interior of the battery 1 flows into the exhaust channel 51 through the exhaust port 53, allowing the gas inside the battery 1 to be rapidly discharged, which is conducive to reducing pressure inside the battery 1 and further lowering a risk of explosion of the battery 1.

It should be noted that thermal runaway of the battery 1 leads to an increase in the pressure inside the battery 1. When the pressure inside the battery 1 reaches a specific threshold, the gas inside the battery 1 breaks through the explosion-proof portion to separate the explosion-proof portion from the battery 1, allowing the gas inside the battery 1 to be released rapidly, thereby reducing the pressure inside the battery 1, enhancing the use safety of the battery pack, and thus lowering a risk of explosion of the battery 1.

Therefore, by enabling the exhaust port 53 to correspond to the explosion-proof portion of the battery 1, the exhaust port 53 avoids the explosion-proof portion in the thickness direction of the mounting bracket 5, thereby preventing a risk that the mounting bracket 5 obstructs the explosion-proof portion, ensuring that the explosion-proof portion is opened normally in the case of thermal runaway of the battery 1, ensuring the use safety of the battery 1, and further ensuring the use safety of the battery pack.

It should be noted that the mounting bracket 5 and the support assembly 3 may be made of high-strength, temperature-resistant insulating materials, such as glass-fiber composite materials and sprayed high-temperature-resistant metallic coatings. The foregoing materials are relatively lightweight, are lower in manufacturing difficulty and costs, feature high compressive strength and good heat resistance, and can effectively prevent the intrusion of the foam adhesive 7 into the power distribution space 24, thereby ensuring the integrity of the space. Additionally, the foregoing materials remain effective under external high temperature or an internal failure of the battery 1 due to high temperature, thereby ensuring the stability and smoothness of the exhaust channel 51.

In some embodiments of the present disclosure, as shown in FIG. 3, FIG. 5, and FIG. 8, the partition member 31 is provided with a first insertion portion 312, the mounting bracket 5 is provided with a second insertion portion 52, and the first insertion portion 312 and the second insertion portion 52 are in insertion fit to assemble the partition member 31 to the mounting bracket 5.

Specifically, the partition member 31 is provided with a plurality of first insertion portions 312, and plurality of first insertion portions 312 are arranged in sequence in the length direction of the partition member 31. The mounting bracket 5 is provided with a plurality of second insertion portions 52, and the plurality of second insertion portions 52 are in one-to-one correspondence with the plurality of first insertion portions 312. If the first insertion portion 312 is one of an insertion sheet and an insertion groove, the second insertion portion 52 is the other of the insertion sheet and the insertion groove. For example, if the first insertion portion 312 is an insertion sheet, the second insertion portion 52 is an insertion groove, and if the first insertion portion 312 is an insertion groove, the second insertion portion 52 is an insertion sheet. The insertion sheet is inserted into the insertion groove, and the insertion sheet and the insertion groove are in transition fit or interference fit.

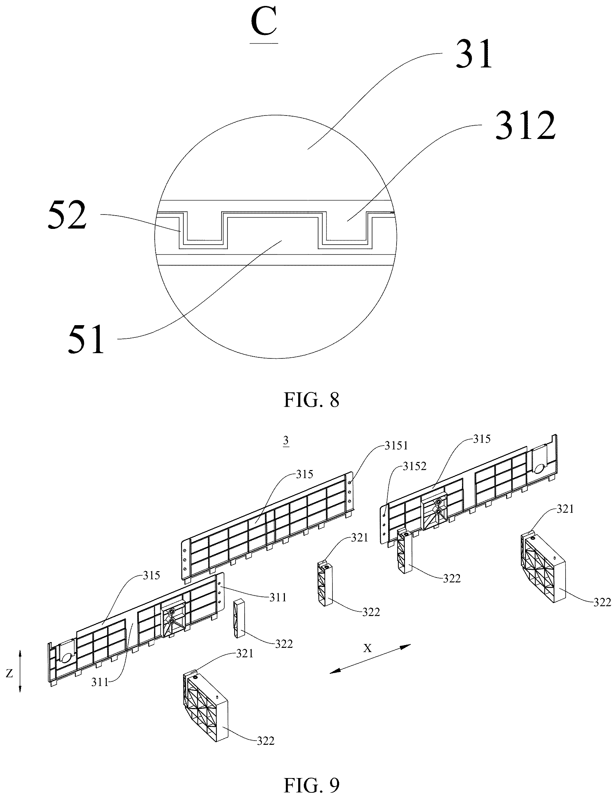

Further, the first insertion portion 312 may be constructed as an insertion sheet, and the formed insertion sheet extends in a direction away from a first adhesive baffle 3. The second insertion portion 52 may be constructed as an insertion groove adapted to the first insertion portion 312. As shown in FIG. 8, the second insertion portion 52 is constructed as an insertion groove that is recessed from the upper surface of the mounting bracket 5 towards an interior of the mounting bracket 5, so that during insertion fit between the first insertion portion 312 and the second insertion portion 52, the first insertion portion 312 is adapted to extend into the second insertion portion 52, to achieve an effect of the insertion fit between the first insertion portion 312 and the second insertion portion 52.

Therefore, during assembly of the partition member 31 and the mounting bracket 5, the first insertion portion 312 may be inserted into the second insertion portion 52 in the third direction Z to achieve fitting mounting of the partition member 31 and the mounting bracket 5. An assembly process is simple and convenient, which is conducive to improving assembly efficiency of the battery pack housing 100.

In some embodiments of the present disclosure, as shown in FIG. 3 to FIG. 5, the support assembly 3 further includes a limiting member 33, the limiting member 33 is inserted into the partition member 31, the limiting member 33 and the partition member 31 jointly define a mounting channel 34, and the mounting channel 34 is configured to mount a pipeline.

Specifically, the support assembly 3 further includes the limiting member 33. The limiting member 33 and a mounting notch of the partition member 31 are assembled by insertion in the third direction Z to jointly define the mounting channel 34. The mounting channel 34 is configured to mount the pipeline, and the pipe includes, but is not limited to, a battery cooling pipeline and the like. During mounting of the pipeline, the pipeline is enabled to pass through the mounting notch of the partition member 31, and the limiting member 33 is inserted into the mounting notch of the partition member 31 in the third direction Z to fasten the pipeline in the mounting channel 34. With this arrangement, a mounting process of the pipeline in the second direction Y is implemented. It may be understood that when the height of the pipeline changes, the limiting member 33 may be flexibly adjusted in the third direction Z to obtain a mounting channel 34 that is adapted to the pipeline. Meanwhile, the mounting notch of the partition member 31 may be adaptively adjusted based on a specific position of the pipeline. By adjusting the limiting member 33 to fit with the partition member 31, different mounting channels 34 may be obtained, thereby improving the applicability of the support assembly 3.

In some embodiments of the present disclosure, as shown in FIG. 4, the limiting member 33 is provided with a third insertion portion 331, the partition member 31 is provided with a fourth insertion portion 313, and the third insertion portion 331 and the fourth insertion portion 313 are in insertion fit to assemble the limiting member 33 to the partition member 31.

Specifically, if the third insertion portion 331 is one of an insertion sheet and an insertion groove, the fourth insertion portion 313 is the other of the insertion sheet and the insertion groove. For example, if the third insertion portion 331 is an insertion sheet, the fourth insertion portion 313 is an insertion groove, and if the third insertion portion 331 is an insertion groove, the fourth insertion portion 313 is an insertion sheet. The insertion sheet is inserted into the insertion groove, and the insertion sheet and the insertion groove are in transition fit or interference fit. With this arrangement, during assembly of the limiting member 33 and the partition member 31, the third insertion portion 331 may be inserted into the fourth insertion portion 313 in the third direction Z to achieve fitting mounting of the limiting member 33 and the partition member 31. A mounting process is simple and convenient, which is conducive to improving assembly efficiency of the battery pack housing 100.

In some embodiments of the present disclosure, as shown in FIG. 3 and FIG. 5, the partition member 31 is provided with a mounting seat 314. That is, the mounting seat 314 may be disposed on the partition member 31. The mounting seat 314 may be integrated with the partition member 31 or may be detachable, which is not specifically limited herein. The mounting seat 314 is configured to mount a busbar for the battery 1 and a busbar for the power distribution box 4. Therefore, by disposing the mounting seat 314 on the partition member 31, an auxiliary function is added to the partition member 31, thereby providing a platform for mounting the busbar for the battery 1 and the busbar for the power distribution box 4.

In some embodiments of the present disclosure, as shown in FIG. 9, the partition member 31 includes a plurality of partition sub-members 315, and the plurality of partition sub-members 315 are sequentially in lapping fit in the first direction X of the battery pack housing 100 to form the partition member 31.

Specifically, the partition member 31 includes the plurality of partition sub-members 315, and a quantity of partition sub-members 315 is set according to specific needs. For example, the quantity of partition sub-members 315 may be 2, 3, 4, or 5, which is not specifically limited herein. Additionally, in the first direction X, the plurality of partition sub-members 315 are sequentially in lapping fit to form the partition member 31. As a specific example, three partition sub-members 315 are sequentially lapped to form one partition member 31. In a lapping process of the partition sub-members 315, partition sub-members 315 on two sides may be mounted first, and then during mounting of a partition sub-member 315 in the middle, a lapping area of the partition sub-member 315 in the middle is enabled to simultaneously abut against lapping areas of the partition sub-members 315 on two sides to limit the partition sub-member 315 in the middle. Alternatively, the partition sub-members 315 may be mounted in sequence in order, which is not specifically limited herein. Therefore, by providing the plurality of partition sub-members 315, it is possible to select a suitable partition sub-member 315 based on a size of the battery pack housing 100 to meet different size requirements of the battery pack housing 100, thereby improving the versatility of the partition member 31.

It should be noted that, as shown in FIG. 9, when the plurality of partition sub-members 315 are sequentially lapped, a first snap-fitting portion 3151 and a second snap-fitting portion 3152 may be disposed in a lapping area of two adjacent partition sub-members 315 respectively, where the first snap-fitting portion 3151 is one of a snap tab or a snap slot, and the second snap-fitting portion 3152 is the other of the snap tab or the snap slot. With this arrangement, two adjacent partition sub-members 315 may be snap-fitted by means of the lapping area, thereby improving strength of a connection between the partition sub-members 315 and further better resisting the expansion-induced compressive force from the foam adhesive 7.

In some embodiments of the present disclosure, as shown in FIG. 9, the partition member 31 includes a plurality of partition sub-members 315, and the plurality of partition sub-members 315 are sequentially in lapping fit in the first direction X of the battery pack housing 100 to form the partition member 31. Two adjacent partition sub-members 315 jointly define the first assembly portion 311 in a lapping area, and at least one support sub-member 322 is assembled to the first assembly portion 311.

Specifically, when the partition member 31 includes the plurality of partition sub-members 315, the support sub-member 322 may be fixedly mounted to a corresponding partition sub-member 315 to transmit expansion-induced compressive force borne by the partition sub-member 315 to the side frame 22 through the support sub-member 322. Meanwhile, when the plurality of partition sub-members 315 are sequentially lapped in the first direction X, two adjacent partition sub-members 315 jointly define the first assembly portion 311 in a lapping area. The defined first assembly portion 311 may be an assembly groove or a mounting boss, and the support sub-member 322 is mounted at the first assembly portion 311. With this arrangement, a lapping area of the partition sub-members 315 may be reused to form the first assembly portion 311, thereby reducing a quantity of specially disposed first assembly portions 311. Meanwhile, the first assembly portion 311 defined by mounting the support sub-member 322 to the lapping area also has a specific support and limiting effect on the lapping area, so that expansion-induced compressive force applied to the lapping area of the partition sub-members 315 can be transferred to the side frame 22, thereby avoiding a collapse failure in the lapping area.

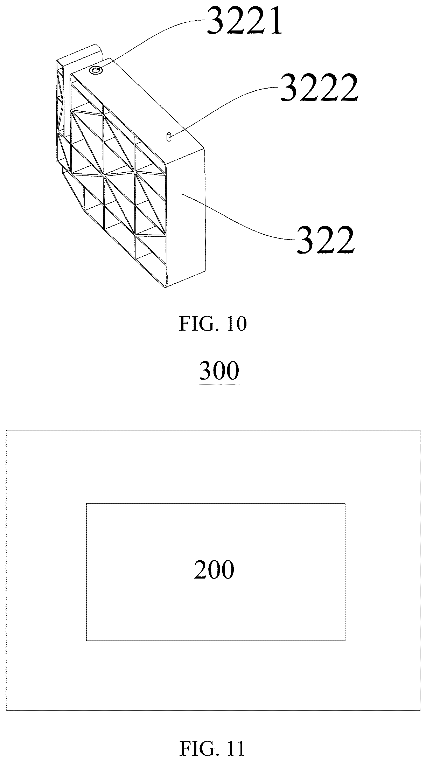

In some embodiments of the present disclosure, as shown in FIG. 10, at least one support sub-member 322 is provided with a mounting hole 3221. That is, the mounting hole 3221 may be disposed in the support sub-member 322 to utilize the support sub-member 322 to mount an electrical element such as a circuit board, thereby adding an auxiliary function to the support sub-member 322 and providing a platform for mounting of the electrical element.

In some embodiments of the present disclosure, as shown in FIG. 10, at least one support sub-member 322 is provided with a positioning portion 3222. That is, by disposing the positioning portion 3222 on the support sub-member 322, an electrical element to be mounted may be positioned. Optionally, the positioning portion 3222 includes, but is not limited to, a positioning pin, a positioning post, and the like. With this arrangement, quick positioning during mounting of the electrical element is facilitated, and assembly efficiency is improved.

In some embodiments of the present disclosure, as shown in FIG. 1, a stop member 6 is disposed in the accommodating cavity 21. The stop member 6 is located on a side that is of the partition member 31 and that is away from the battery 1, and the stop member 6 is adapted to stop the partition member 31 to limit movement of the partition member 31 towards a direction away from the battery 1.

Specifically, the stop member 6 is disposed in the accommodating cavity 21 and is fixedly mounted on the tray 2. Mounting manners include, but are not limited to, welding, a bolted connection, and the like. There may be a plurality of stop members 6, for example, a quantity of stop members 6 may be 2, 3, 4, or 5, which is not specifically limited herein. For example, two stop members 6 are disposed in the accommodating cavity 21, and the two stop members 6 are located on two sides of the partition member 31 respectively and on a side that is of the partition member 31 and that is away from the battery 1. The stop member 6 has a stop effect, and the stop member 6 is configured to stop the partition member 31 to limit the movement of the partition member 31 towards the direction away from the battery 1. That is, in a process of inserting the partition member 31, the stop member 6 may limit the partition member 31 in the second direction Y. Meanwhile, the stop member 6 may also provide support for the partition member 31 when the partition member 31 bears the expansion-induced compressive force, and part of the expansion-induced compressive force borne by the partition member 31 is transmitted to the side frame 22 through the stop member 6, thereby increasing a transmission route of the expansion-induced compressive force, which is conducive to further sharing part of the expansion-induced compressive force borne by the partition member 31, and preventing the partition member 31 from intruding into the power distribution space 24 formed between the partition member 31 and the side frame 22.

As shown in FIG. 1 and FIG. 2, the battery pack 200 according to an embodiment of a second aspect of the present disclosure includes a battery 1 and the battery pack housing 100 in the embodiment of the first aspect, and the battery 1 is mounted in the battery mounting space 23.

According to the battery pack 200 in this embodiment of the present disclosure, since the foregoing battery pack housing 100 is provided, expansion-induced compressive force borne by the partition member 31 can be distributed to the side frame 22 of the tray 2 through the support member 32, allowing the partition member 31 to effectively resist expansion-induced compressive force from foam adhesive 7, thereby preventing the partition member 31 from intruding into the power distribution space 24 formed between the partition member 31 and the side frame 22.

In some embodiments of the present disclosure, as shown in FIG. 2, there are a plurality of batteries 1, and the batteries 1 are cylindrical batteries.

In some embodiments of the present disclosure, as shown in FIG. 1 and FIG. 2 and in conjunction with FIG. 5, the battery pack 200 further includes a power distribution box 4, and the power distribution box 4 is disposed on the side frame 22 and is at least partially disposed in the power distribution space 24. The support member 32 includes a plurality of support sub-members 322, and the plurality of support sub-members 322 are spaced apart in the length direction of the partition member 31, at least one support sub-member 322 is supported between the partition member 31 and the side frame 22 of the tray 2, and at least one support sub-member 322 is supported between the partition member 31 and the power distribution box 4.

Specifically, the battery pack 200 further includes the power distribution box 4, and the power distribution box 4 is mounted on the side frame 22 and is at least partially located in the power distribution space 24. When the support member 32 includes a plurality of support sub-members 322, at least one support sub-member 322 is supported between the partition member 31 and the side frame 22 of the tray 2, and at least one support sub-member 322 is supported between the partition member 31 and the power distribution box 4. For example, when the support member 32 includes five support sub-members 322, it is possible to dispose one, two, three, or four support sub-members 322 to be supported between the partition member 31 and the side frame 22 of the tray 2, and correspondingly dispose four, three, two, or one support sub-member 322 to be supported between the partition member 31 and the power distribution box 4. Further, as shown in FIG. 1 and FIG. 5, descriptions are provided by using an example in which two support sub-members 322 are supported between the partition member 31 and the side frame 22 of the tray 2 and three support sub-members 322 are supported between the partition member 31 and the power distribution box 4. The two support sub-members 322 are located on two sides of the power distribution box 4 and are perpendicularly disposed between the partition member 31 and the side frame 22 of the tray 2, and the three support sub-members 322 are perpendicularly disposed between the partition member 31 and the power distribution box 4. When the partition member is subjected to the expansion-induced compressive force from the foam adhesive 7, part of the expansion-induced compressive force is directly transmitted to the side frame 22 through the two support sub-members 322 on two sides of the power distribution box 4, and another part of the expansion-induced compressive force is transmitted to the power distribution box 4 through the three support sub-members 322, and is indirectly transmitted to the side frame 22 through the power distribution box 4. With this arrangement, not only can the power distribution box 4 be utilized to transmit the expansion-induced compressive force to the side frame 22 but also an area of a transmission surface can be increased, which is conducive to improving the stability during force transmission and indirectly improves an ability of the partition member 31 to resist the expansion-induced compressive force from the foam adhesive 7.

As shown in FIG. 11, an electric apparatus 300 according to an embodiment of a third aspect of the present disclosure includes the battery pack 200 in the embodiment of the second aspect.

According to the electric apparatus 300 in this embodiment of the present disclosure, since the foregoing battery pack 200 is provided, expansion-induced compressive force borne by the partition member 31 can be distributed to the side frame 22 of the tray 2 through the support member 32, allowing the partition member 31 to effectively resist expansion-induced compressive force from foam adhesive 7, thereby preventing the partition member 31 from intruding into the power distribution space 24 formed between the partition member 31 and the side frame 22.

In the description of the present disclosure, it should be understood that the orientations or positional relationships indicated by the terms "center", "longitudinal", "transversal", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationship shown in the accompanying drawings, and are only for ease of describing the present disclosure and simplifying the description, rather than indicating or implying that an indicated apparatus or element must have a specific orientation or must be constructed and operated in a specific orientation. Therefore, this cannot be understood as a limitation on the present disclosure.

In addition, terms "first" and "second" are merely used for description purposes, and should not be understood as indicating or implying relative importance or implicitly indicating a quantity of technical features indicated. Therefore, a feature defined by "first" or "second" may explicitly or implicitly include one or more such features. In the descriptions of the present disclosure, "a plurality of" means two or more, unless otherwise explicitly defined.

In the present disclosure, unless otherwise explicitly specified and defined, terms such as "mount", "interconnect", "connect", and "fix" should be understood in a broad sense, for example, may be understood as a fixed connection, a detachable connection, or an integrated connection, may be understood as a mechanical connection, or an electrical connection, or may be understood as a direct connection or an indirect connection through an intermediate medium, or may be understood as internal communication between two elements or an interaction relationship between two elements. A person of ordinary skill in the art may understand specific meanings of the foregoing terms in the present disclosure based on a specific case.

In the present disclosure, unless otherwise explicitly specified and defined, that the first feature is "above" or "below" the second feature may be that the first feature and the second feature are in direct contact, or the first feature and the second feature are in indirect contact through an intermediate medium. In addition, that the first feature is "on", "above", and "over" the second feature may be that the first feature is directly above or obliquely above the second feature, or merely indicates that a horizontal height of the first feature is higher than that of the second feature. That the first feature is "under", "below", and "beneath" the second feature may be that the first feature is directly below or obliquely below the second feature, or merely indicates that a horizontal height of the first feature is less than that of the second feature.

In the description of this specification, descriptions referring to the terms "one embodiment", "some embodiments", "examples", "specific examples" or "some examples" mean that specific features, structures, materials, or characteristics described with reference to this embodiment or example are included in at least one embodiment or example of the present disclosure. In this specification, schematic expression of the above terms does not necessarily specific to the same embodiment or example. Moreover, the described specific features, structures, materials, or characteristics can be combined in any one or more embodiments or examples appropriately. In addition, a person skilled in the art can integrate or combine different embodiments or examples and characteristics of different embodiments or examples described in this specification, provided that they do not conflict with each other.

Although the embodiments of the present disclosure have been shown and described above, it may be understood that the foregoing embodiments are examples and cannot be understood as limitations on the present disclosure, and a person of ordinary skill in the art can make changes, modifications, substitutions, or variations on the foregoing embodiments within the scope of the present disclosure.

## Claims

1. A battery pack housing (100), comprising:
a tray (2), an accommodating cavity (21) being formed in the tray (2); and
a support assembly (3), the support assembly (3) being disposed in the accommodating cavity (21), the support assembly (3) comprising a partition member (31) and a support member (32), the partition member (31) partitioning the accommodating cavity (21) into battery mounting space (23) and power distribution space (24), and the support member (32) being located in the power distribution space (24) and being supported between the partition member (31) and a side frame (22) of the tray (2).

2. The battery pack housing (100) according to claim 1, wherein the partition member (31) is provided with a first assembly portion (311), the support member (32) is provided with a second assembly portion (321), and the first assembly portion (311) and the second assembly portion (321) are assembled by fitting to fasten the partition member (31) to the support member (32).

3. The battery pack housing (100) according to claim 1 or 2, wherein the first assembly portion (311) is one of an assembly groove and a mounting boss, and the second assembly portion (321) is the other of the assembly groove and the mounting boss.

4. The battery pack housing (100) according to any one of claims 1 to 3, wherein the support member (32) comprises a plurality of support sub-members (322), and the plurality of support sub-members (322) are spaced apart in a length direction of the partition member (31).

5. The battery pack housing (100) according to any one of claims 1 to 4, further comprising a mounting bracket (5), the mounting bracket (5) being mounted in the battery mounting space (23), the mounting bracket (5) being adapted to mount a battery (1), and the partition member (31) being movably inserted into the mounting bracket (5).

6. The battery pack housing (100) according to claim 5, wherein an exhaust channel (51) is formed on the mounting bracket (5), the mounting bracket (5) is provided with an exhaust port (53) in communication with the exhaust channel (51), and the exhaust port (53) is adapted to correspond to an explosion-proof portion of the battery (1).

7. The battery pack housing (100) according to claim 5 or 6, wherein the partition member (31) is provided with a first insertion portion (312), the mounting bracket (5) is provided with a second insertion portion (52), and the first insertion portion (312) and the second insertion portion (52) are in insertion fit to assemble the partition member (31) to the mounting bracket (5).

8. The battery pack housing (100) according to any one of claims 1 to 4, wherein the support assembly (3) further comprises a limiting member (33), the limiting member (33) is inserted into the partition member (31), the limiting member (33) and the partition member (31) jointly define a mounting channel (34), and the mounting channel (34) is configured to mount a pipeline.

9. The battery pack housing (100) according to claim 8, wherein the limiting member (33) is provided with a third insertion portion (331), the partition member (31) is provided with a fourth insertion portion (313), and the third insertion portion (331) and the fourth insertion portion (313) are in insertion fit to assemble the limiting member (33) to the partition member (31).

10. The battery pack housing (100) according to any one of claims 1 to 9, wherein the partition member (31) comprises a plurality of partition sub-members (315), and the plurality of partition sub-members (315) are sequentially in lapping fit in a first direction of the battery pack housing (100) to form the partition member (31).

11. The battery pack housing (100) according to any one of claims 4 to 9, wherein the partition member (31) comprises a plurality of partition sub-members (315), the plurality of partition sub-members (315) are sequentially in lapping fit in a first direction of the battery pack housing (100) to form the partition member (31), two adjacent partition sub-members (315) jointly define a first assembly portion (311) in a lapping area, and at least one support sub-member (322) is assembled to the first assembly portion (311).

12. The battery pack housing (100) according to any one of claims 1 to 4, wherein a stop member (6) is disposed in the accommodating cavity (21), the stop member (6) is located on a side that is of the partition member (31) and that is away from the battery (1), and the stop member (6) is adapted to stop the partition member (31) to limit movement of the partition member (31) towards a direction away from the battery (1).

13. A battery pack (200), comprising a battery (1) and the battery pack housing (100) according to any one of claims 1 to 12, the battery (1) being mounted in the battery mounting space (23).

14. The battery pack (200) according to claim 13, wherein there are a plurality of batteries (1), and the batteries (1) are cylindrical batteries.

15. The battery pack (200) according to claim 13 or 14, further comprising a power distribution box (4), the power distribution box (4) being disposed on the side frame (22) and being at least partially disposed in the power distribution space (24), the support member (32) comprising a plurality of support sub-members (322), the plurality of support sub-members (322) being spaced apart in the length direction of the partition member (31), at least one support sub-member (322) being supported between the partition member (31) and the side frame (22) of the tray (2), and at least one support sub-member (322) being supported between the partition member (31) and the power distribution box (4).

16. An electric apparatus (300), comprising the battery pack (200) according to any one of claims 13 to 15.
